# EUROPÄISCHE PATENTSCHRIFT

(11) **EP 0 777 107 B1**
(45) Veröffentlichungstag und Bekanntmachung des Hinweises auf die Patenterteilung: **11.06.2003**
(21) Anmeldenummer: 96118976.8
(22) Anmeldetag: 27.11.1996
(51) Int. Cl.: G01D 11/02, G01B 7/30, G01D 5/165, F16D 1/08

(54) **System zur Verbindung des Rotors eines Drehsensors mit der Welle eines Drehorgans**
System for connecting a rotor of a rotation sensor with the shaft of a rotating device
Système pour interconnecter un rotor d'un capteur de rotation avec un arbre d'un dispositif de rotation

(30) Priorität: 02.12.1995 DE 19544997
(43) Veröffentlichungstag der Anmeldung: 04.06.1997
(73) Patentinhaber: Hella KG Hueck & Co., 59552 Lippstadt (DE)
(72) Erfinder: Berglar, Heinrich, 59510 Lippetal (DE)

(56) Entgegenhaltungen:
- DE-A- 3 900 797
- US-A- 4 973 188
- US-A- 5 415 144

## Beschreibung

Die Erfindung betrifft ein System zur Verbindung des Rotors eines Drehsensors mit der Welle eines Drehorgans nach dem Oberbegriff des Anspruches 1 sowie einen Drehsensor mit einem System zur Verbindung des Rotors eines Drehsensors mit der Welle eines Drehorgans.

Drehsensoren finden beispielsweise Anwendung in Kraftfahrzeugen zur Sensierung der Stellung einer Drosselklappe oder eines Fahrpedales.

Hierbei ist es wichtig, daß der Rotor, beispielsweise ausgeführt als Schleiferträger eines Drehpotentiometers, zuverlässig auf der Welle geführt wird. Insbesondere soll durch die Verbindung zwischen Welle und Rotor der Rotor sowohl in axialer als auch in radialer Richtung, und zwar möglichst spielfrei gesichert werden.

Zur Verbindung zwischen Welle und Rotor werden dabei bei bekannten Lösungen zusätzliche Anlegeteile oder Federn (letzteres dargestellt zum Beispiel in der DE 40 28 931 A1) benötigt, was sich besonders durch den hierdurch verursachten Montageaufwand recht kostenaufwendig auswirkt.

Aus der Druckschrift US-A-4 973 188 ist ein Verbindungselement zwischen einer Welle und einem Instrumentenzeiger bekannt, wobei der Zeiger eine Buchse mit einer äußeren Hülse und einem inneren Zapfen aufweist, die mit einer entsprechend ausgeformten Seite des Verbindungselements verbindbar ist. Durch die konische Ausgestaltung der ineinandergreifenden Elemente wird eine gute kraftschlüssige, jedoch keine formschlüssige Verbindung zwischen Verbindungselement und Zeigerbuchse erzielt.

Eine ebenfalls kraftschlüssige Verbindung z. B. zwischen einer Nabe und einer Welle ermöglicht die aus der DE 39 00 797 A1 bekannte Vorrichtung zum kraftschlüssigen Befestigen einer Nabe auf einer Well, die aus zwei in die Bohrung der Nabe und auf die Welle ein- bzw. aufzuschiebenden koaxialen Hülsen besteht, bei denen die äußere Hülse einen dem Umfang der Bohrung angepaßten Außenumfang und die innere Hülse einen dem Wellenumfang angepaßten Innenumfang aufweist und der Innenumfang der äußeren Hülse und der Außenumfang der inneren Hülse derart unrund sind, daß die beiden Hülsen in einer Winkelstellung zueinander im wesentlichen locker ineinanderpassen und in einer anderen Winkelstellung zueinander unter Ausdehnung der äußeren Hülse und Zusammendrückung der inneren Hülse miteinander verklemmt sind und die Nabe mit der Welle verklemmen.

Eine mögliche Ausführungsform eines Fahrpedalgebers mit einem Drehsensor ist aus der US-A-5 415 144 bekannt.

Es ist die Aufgabe der Erfindung, ein System zur Verbindung des Rotors eines Drehsensors mit einer Welle eines Drehorgans zu schaffen, bei dem die radiale und axiale Verbindung zwischen Welle und Rotor auf besonders einfache und kostengünstige Weise erfolgt. Die Verbindung soll dabei besonders sicher und zudem montagetechnisch besonders einfach herstellbar sein.

Diese Aufgabe wird erfindungsgemäß durch die kennzeichnenden Merkmale des Anspruches 1 gelöst.

Durch die einander im Preßsitz umfassenden Teile des ersten und zweiten Verbindungselementes wird eine sichere Verbindung in axialer Richtung und zudem durch die ineinandergreifenden Nocken und Nuten eine sichere Verbindung in radialer Richtung geschaffen.

Die Verbindung von Welle und Rotor erfolgt dabei auf montagetechnisch besonders einfache Weise durch Ineinanderdrücken der beiden Verbindungselemente. Vorteilhaft ist dabei auch, daß zur Herstellung dieser Verbindung keine weiteren Einzelteile benötigt werden und montiert werden müssen.

Ebenfalls vorteilhaft ist, daß die so hergestellte Verbindung sowohl in axialer Richtung als auch in radialer Richtung besonders wenig Spiel aufweist.

Weitere vorteilhafte Ausgestaltungen und Weiterbildungen eines erfindungsgemäßen Drehsensors sind in den abhängigen Ansprüchen beschrieben. So ist es vorteilhaft, daß die äußere Hülse und der Zapfen des ersten Verbindungselementes sowie die innere Hülse des zweiten Verbindungselementes als konstruktiv besonders einfache Ausgestaltung die Form eines Hohlzylinders aufweisen.

Ebenfalls vorteilhaft kann aber auch eine dreikantige, vierkantige oder mehrkantige Kontur vorgesehen werden, wodurch sich bezüglich der radialen Sicherung eine besonders sichere, weil durch die Kontur zusätzlich formschlüssige Verbindung ergibt.

Besonders vorteilhaft ist es, wenn die Nocken einen oder mehrere Hinterschnitte aufweisen, die sich widerhakenartig in das Material des Nuten aufweisenden Verbindungselementes eindrücken, wodurch die Verbindungselemente in axialer Richtung nahezu untrennbar verbunden sind. Daher sollte das Nocken aufweisende Verbindungselement aus einem härteren Material bestehen als das Nuten aufweisende Verbindungselement.

Vorteilhafterweise können dabei beide Verbindungselemente auch aus Kunststoff gefertigt sein, wobei das Nocken aufweisende Verbindungselement vorteilhafterweise aus einem härteren Kunststoff besteht, als das Nuten aufweisende Verbindungselement. Die sich durch die Hinterschnitte auf den Nocken ergebende formschlüssige Verbindung der Verbindungselemente wird dadurch bewirkt, daß die Hinterschnitte einen erhöhten Druck innerhalb des Preßsitzes bewirken und der Kunststoff des anderen Verbindungselementes unter diesem erhöhten Druck zu fließen beginnt.

Eine vorteilhafte Anwendung des erfindungsgemäßen Drehsensors besteht darin, daß dieser zur Sensierung der Stellung eines Fahrpedales oder einer Drosselklappe in einem Kraftfahrzeug verwendet wird, wobei der Rotor zum Beispiel ein hebelartig ausgebildeter Schleiferträger eines Drehpotentiometers ist, welcher mit der Welle der Drosselklappe oder des Fahrpedales verbunden ist.

Ein Ausführungsbeispiel der Erfindung ist in der Zeichnung dargestellt und soll im folgenden anhand der Zeichnung näher erläutert werden.

Es zeigen
- Figur 1: einen Schnitt durch die miteinander verbundenen ersten und zweiten Verbindungselemente;
- Figur 2: eine Seitenansicht des Rotors eines erfindungsgemäßen Drehsensors;
- Figur 3: den Rotor des erfindungsgemäßen Drehsensors in Blickrichtung auf die offene Seite des Verbindungselementes;
- Figur 4: einen seitlichen Schnitt durch das Verbindungselement des Rotors des erfindungsgemäßen Drehsensors.

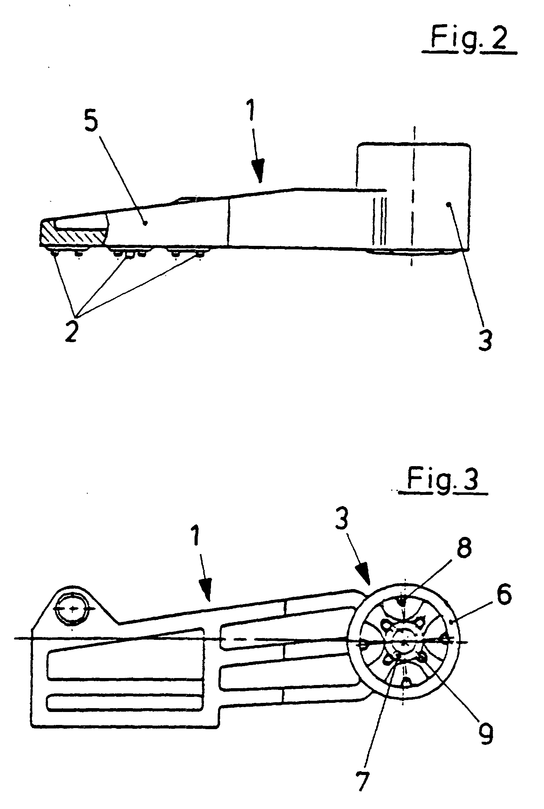

Die Figur 2 zeigt den Rotor (1) eines erfindungsgemäßen Drehsensors in einer Seitenansicht. Zu erkennen ist der als Hebel (5) ausgebildete Rotor (1), welcher in seinem oberen Abschnitt mehrere Kontaktfedern (2) trägt. In seinem unteren Abschnitt ist an dem Hebel (5) einstückig ein (erstes) Verbindungselement (3) angeformt.

Die Figur 3 zeigt den gleichen Rotor (1) in einer gedrehten Ansicht mit Blick auf die offene Seite des Verbindungselementes (3). Zu erkennen sind die äußere Hülse (6) sowie der im inneren der äußeren Hülse (6) und koaxial dazu angeordnete Zapfen (7), der hier ebenso wie die äußere Hülse (6) die Form eines Hohlzylinders besitzt.

Die äußere Hülse (6) weist an ihrem inneren Umfang ebenso wie der Zapfen (7) an seinem äußeren Umfang jeweils mehrere Nocken (8, 9) auf.

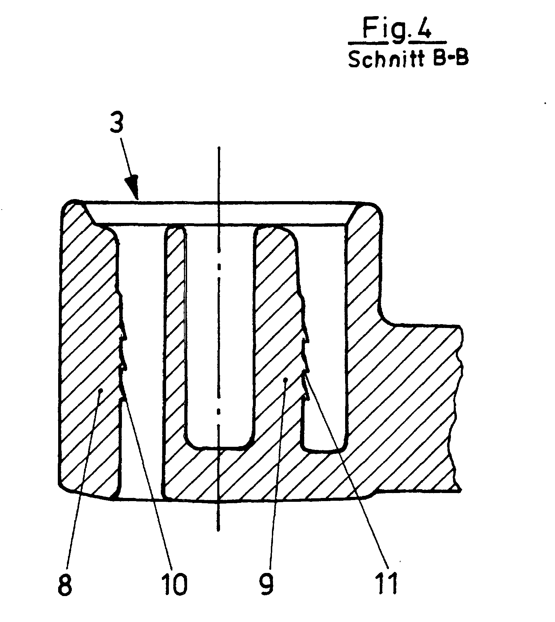

Wie die Figur 4 in einem seitlichen Schnitt durch das Verbindungselement (3) zeigt, weisen die Nocken (8, 9) jeweils mehrere Hinterschnitte (10, 11) auf, welche sich beim montierten Drehsensor in die Nuten des hier nicht dargestellten zweiten Verbindungselementes einschneiden.

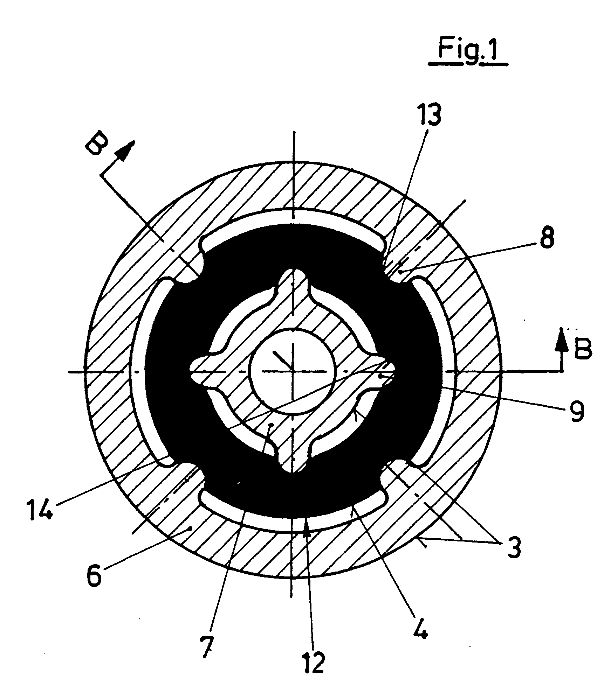

Einen Schnitt durch die Verbindung des ersten und zweiten Verbindungselementes zeigt die Figur 1.

Hierbei zeigt die dunkle Fläche die Schnittkontur des als innere Hülse (12) ausgeführten zweiten Verbindungselementes (4), welches zum Beispiel durch einstückige Umspritzung mit der (in der Figur nicht dargestellten) Welle eines (ebenfalls nicht dargestellten) Drehorgans verbunden ist.

Die schraffierten Flächen gehören zu dem mit dem Rotor verbundenen ersten Verbindungselement (3) wobei der Zapfen (7) im Inneren der inneren Hülse (12) angeordnet ist und die äußere Hülse (6) des ersten Verbindungselementes (3) die innere Hülse (12) des zweiten Verbindungselementes (4) im Preßsitz umgreift.

Der Zapfen (7) und die äußere Hülse (6) des ersten Verbindungselementes (3) weisen jeweils Nocken (8, 9) auf, welche in Nuten (13, 14) des zweiten Verbindungselementes (4) eingreifen und so die Verbindung zwischen dem ersten Verbindungselement (3) und dem zweiten Verbindungselement (4) in radialer Richtung sichern.

An den Nocken (8, 9) des ersten Verbindungselementes (3) angeformte Hinterschnitte (in der Figur 1 nicht erkennbar) drücken sich in das Kunststoffmaterial des zweiten Verbindungselementes (4) ein und sorgen so für eine besonders sichere Verbindung in axialer Richtung.

## Patentansprüche

1. System zur Verbindung des Rotors eines Drehsensors mit der Welle eines Drehorgans, wobei der Rotor (1) mit der Welle des Drehorgans verbunden ist, wobei sowohl die Welle als auch der Rotor (1) an ihren Endabschnitten jeweils ein Verbindungselement (3, 4) aufweisen, wobei ein erstes Verbindungselement (3) eine äußere Hülse (6) und koaxial dazu einen Zapfen (7) aufweist und ein weiteres Verbindungselement (4) eine innere Hülse (12) aufweist, und wobei der Zapfen (7) des ersten Verbindungselementes (3) in die Ausnehmung der inneren Hülse (12) des zweiten Verbindungselementes (4) im Preßsitz eingefügt ist, und die äußere Hülse (6) des ersten Verbindungselementes (3) die innere Hülse (12) des zweiten Verbindungselementes (4) im Preßsitz umfaßt,
**dadurch gekennzeichnet,**
**daß** die Außenkontur des Zapfens (7) und die Innenkontur der äußeren Hülse (6) des ersten Verbindungselementes (3) Nocken (8, 9) oder Nuten (13, 14) aufweist und daß die Innenkontur und die Außenkontur der inneren Hülse (12) des zweiten Verbindungselementes (4) entsprechend Nuten (13, 14) oder Nocken (8, 9) zur Aufnahme der Nocken (8, 9) oder Nuten (13, 14) des ersten Verbindungselementes (3) aufweist.

2. System zur Verbindung des Rotors eines Drehsensors mit der Welle eines Drehorgans nach Anspruch 1, **dadurch gekennzeichnet, daß** die äußere Hülse (6) und der Zapfen (7) des ersten Verbindungselementes (3) sowie die innere Hülse (12) des zweiten Verbindungselementes (4) im wesentlichen die Form eines Hohlzylinders aufweisen.

3. System zur Verbindung des Rotors eines Drehsensors mit der Welle eines Drehorgans nach Anspruch 1, **dadurch gekennzeichnet, daß** die Nocken (8, 9) einen oder mehrere Hinterschnitte (10, 11) aufweisen.

4. System zur Verbindung des Rotors eines Drehsensors mit der Welle eines Drehorgans nach Anspruch 1, **dadurch gekennzeichnet, daß** das erste Verbindungselement (3) und das zweite Verbindungselement (4) aus Kunststoff sind.

5. System zur Verbindung des Rotors eines Drehsensors mit der Welle eines Drehorgans nach Anspruch 4, **dadurch gekennzeichnet, daß** das Nocken (8, 9) aufweisende Verbindungselement (3) aus einem härteren Kunststoff gefertigt ist als das Nuten (13, 14) aufweisende Verbindungselement (4).

6. Drehsensor mit einem System zur Verbindung des Rotors eines Drehsensors mit de Welle eines Drehorgans nach Anspruch 1, **dadurch gekennzeichnet, daß** der Rotor (1) ein hebelartig ausgebildeter Schleiferträger eines Drehpotentiometers ist.

7. Drehsensor mit einem System zur Verbindung des Rotors eines Drehsensors mit der Welle eines Drehorgans nach Anspruch 1, **dadurch gekennzeichnet, daß** der Drehsensor zur Sensierung der Stellung eines Fahrpedales oder einer Drosselklappe in einem Kraftfahrzeug verwendet wird.

## Claims

1. System for connecting the rotor of a rotation sensor top the shaft of a rotating member, whereby the rotor (1) is connected to the shaft of the rotating member, whereby both the shaft and the rotor (1) have a connecting element (3, 4) on each of their end sections, whereby a first connecting element (3) has an outer sleeve (6) and, coaxially with this, a spigot (7) and a further connecting element (4) has an inner sleeve (12) and whereby the spigot (7) of the first connecting element (3) is inserted into the recess of the inner sleeve (12) of the second connecting element (4) in a press fit, and the outer sleeve (6) of the first connecting element (3) encompasses the inner sleeve (12) of the second connecting element (4) in a press fit, **characterised in that** the external contour of the spigot (7) and the internal contour of the outer sleeve (6) of the first connecting element (3) has elevations (8, 9) or grooves (13, 14) and that the internal contour and the external contour of the inner sleeve (12) of the second connecting element (4) has corresponding grooves (13, 14) or elevations (8, 9) for accommodating the elevations (8, 9) or grooves (13, 14) of the first connecting element (3).

2. System for connecting the rotor of a rotation sensor to the shaft of a rotating member according to Claim 1, **characterised in that** the outer sleeve (6) and the spigot (7) of the first connecting element (3) and the inner sleeve (12) of the second connecting element (4) substantially have the form of a hollow cylinder.

3. System for connecting the rotor of a rotation sensor to the shaft of a rotating member according to Claim 1, **characterised in that** the elevations (8, 9) have one or more undercuts (10, 11).

4. System for connecting the rotor of a rotation sensor to the shaft of a rotating member according to Claim 1, **characterised in that** the first connecting element (3) and the second connecting element (4) are made of plastics.

5. System for connecting the rotor of a rotation sensor to the shaft of a rotating member according to Claim 4, **characterised in that** the connecting element (3) having elevations (8, 9) is made from a harder plastics material than the connecting element (4) having grooves (13, 14).

6. Rotation sensor with a system for connecting the rotor of a rotation sensor to the shaft of a rotating member according to Claim 1, **characterised in that** the rotor (1) is a lever-shaped wiper arm carrier of a rotary potentiometer.

7. Rotation sensor with a system for connecting the rotor of a rotation sensor to the shaft of a rotating member according to Claim 1, **characterised in that** the rotation sensor is used for sensing the position of an accelerator pedal or a throttle valve in a motor vehicle.

## Revendications

1. Système de liaison du rotor d'un capteur de rotation avec l'arbre d'un organe rotatif, le rotor (1) étant relié à l'arbre de l'organe rotatif, aussi bien l'arbre que le rotor (1) présentant chacun à leurs tronçons d'extrémité un élément de liaison (3, 4), un premier élément de liaison (3) présentant une douille extérieure (6) et coaxialement à celle-ci un pivot (7), et un autre élément de liaison (4) présentant une douille intérieure (12), et le pivot (7) du premier élément de liaison (3) étant introduit avec ajustage dans l'évidement de la douille intérieure (12) du deuxième élément de liaison (4), et la douille extérieure (6) du premier élément de liaison (3) entourant avec ajustage la douille intérieure (12) du deuxième élément de liaison (4),
**caractérisé en ce que**
le contour extérieur du pivot (7) et le contour intérieur de la douille extérieure (6) du premier élément de liaison (3) présentent des bosses (8, 9) ou des gorges (13, 14) et **en ce que** le contour intérieur et le contour extérieur de la douille intérieure (12) du deuxième élément de liaison (4) présentent de manière correspondante des gorges (13, 14) ou des bosses (8, 9) pour recevoir les bosses (8, 9) ou les gorges (13, 14) du premier élément de liaison (3).

2. Système de liaison du rotor d'un capteur de rotation avec l'arbre d'un organe rotatif selon la revendication 1, **caractérisé en ce que** la douille extérieure (6) et le pivot (7) du premier élément de liaison (3) ainsi que la douille intérieure (12) du deuxième élément de liaison (4) présentent sensiblement la forme d'un cylindre creux.

3. Système de liaison du rotor d'un capteur de rotation avec l'arbre d'un organe rotatif selon la revendication 1, **caractérisé en ce que** les bosses (8, 9) présentent une ou plusieurs contre-dépouilles (10, 11).

4. Système de liaison du rotor d'un capteur de rotation avec l'arbre d'un organe rotatif selon la revendication 1, **caractérisé en ce que** le premier élément de liaison (3) et le deuxième élément de liaison (4) sont en matière plastique.

5. Système de liaison du rotor d'un capteur de rotation avec l'arbre d'un organe rotatif selon la revendication 4, **caractérisé en ce que** l'élément de liaison (3) présentant des bosses (8, 9) est réalisé en une matière plastique plus dure que l'élément de liaison (4) présentant les gorges (13, 14).

6. Capteur de rotation avec un système de liaison du rotor d'un capteur de rotation à l'arbre d'un organe rotatif selon la revendication 1, **caractérisé en ce que** le rotor (1) est un support de balai réalisé à la manière d'un levier, d'un potentiomètre rotatif.

7. Capteur de rotation avec un système de liaison du rotor d'un capteur de rotation à l'arbre d'un organe rotatif selon la revendication 1, **caractérisé en ce que** le capteur de rotation est utilisé pour détecter la position d'une pédale d'accélérateur ou d'un papillon des gaz dans un véhicule automobile.
